# FASCICULE DE BREVET EUROPEEN

(11) **EP 2 442 197 B1**
(45) Date de publication et mention de la délivrance du brevet: **02.12.2020**
(21) Numéro de dépôt: 11183881.9
(22) Date de dépôt: 04.10.2011
(51) Int. Cl.: G05B 19/416, E05F 15/00, E06B 9/68

(54) **Procédé de fonctionnement d'un actionneur de manoeuvre d'un élément mobile enroulable d'un équipement domotique et actionneur fonctionnant selon ce procédé**
Betriebsverfahren eines Stellgliedes eines beweglichen, aufrollbaren Elementes einer Haushaltvorrichtung und Stellglied, das nach diesem Verfahren funktioniert
Method for operating an actuator moving a windable mobile element of a home-automation device and actuator operating according to said method

(30) Priorité: 13.10.2010 FR 1058324
(43) Date de publication de la demande: 18.04.2012
(73) Titulaire: SOMFY ACTIVITES SA, 74300 Cluses (FR)
(72) Inventeur: BOCQUET, Jean-François, 74700 SALLANCHES (FR); CLEGUER, Anne-Sophie, 74800 LA ROCHE-SUR-FORON (FR); GERMAIN, Florian, 74960 MEYTHET (FR); MUGNIER, David, 74930 PERS-JUSSY (FR)
(74) Mandataire: Novaimo

(56) Documents cités:
- EP-A1- 1 508 844
- EP-A1- 1 510 649
- EP-A1- 2 015 156
- US-A- 4 887 660
- US-A1- 2006 197 481

## Description

L'invention concerne le domaine des actionneurs électromécaniques permettant le pilotage motorisé des éléments mobiles de fermeture, d'occultation ou de protection solaire équipant des ouvertures dans un bâtiment, tels que les volets roulants. En particulier, elle concerne un actionneur électromécanique à vitesse de pilotage variable.

Un tel actionneur est décrit dans le document EP 1 120 528 A2, qui explique que la vitesse de pilotage de l'actionneur (ou vitesse angulaire du rotor ou de l'arbre de sortie) peut être régulée en fonction de la position du tablier de l'élément mobile, de sorte que la vitesse de déplacement du tablier soit constante, en particulier sur la majorité de la course. En effet, compte tenu des caractéristiques physiques des éléments mobiles (par exemple présence d'un dispositif de compensation du poids, diamètre du tube d'enroulement, épaisseur des lames de l'élément), une vitesse de pilotage constante se traduit par des variations de vitesse de déplacement de la lame finale de l'élément mobile. Pour obtenir une vitesse de déplacement (ou vitesse linéaire) constante, il est donc nécessaire de prendre en compte les particularités physiques de l'installation dans le calcul de la vitesse de pilotage à mettre en œuvre.

Ainsi qu'il est décrit dans ce document, une différence de vitesse de déplacement est souhaitable et généralement forcée, au niveau des zones proches des positions extrêmes, ou positions de fin de course par rapport à la vitesse linéaire sur la course. Les départs et/ou arrivées en fin de course sont donc réalisées à vitesse réduite, de manière à protéger l'installation contre les chocs et diminuer les bruits de fonctionnement.

Ce document est cependant silencieux sur le traitement de la vitesse dans chaque zone d'accostage, c'est-à-dire dans chaque zone d'arrivée à proximité d'une position extrême.

On connaît également du document WO2007/080493 divers procédés pour déterminer, pour une installation donnée, le rayon d'enroulement ou les variations de celui-ci au cours de l'enroulement du volet roulant.

Le document WO2002/23005 décrit également un procédé de pilotage dans lequel on fait varier la vitesse angulaire pour diminuer la tension d'alimentation et pour obtenir un couple réduit à l'approche des butées. Ce procédé s'applique aux moteurs de type asynchrone ayant une caractéristique couple/vitesse telle que le couple diminue avec la tension d'alimentation.

Alternativement, ou de manière complémentaire, il est connu du document WO2009/050664 de faire varier la sensibilité de détection d'un effort selon que la charge est menante ou menée. En particulier, la consigne de sensibilité de détection d'une butée haute est différente de la consigne de sensibilité de détection d'une butée basse. Ainsi, il est possible d'adapter la détection d'un effort en butée aux caractéristiques d'un mouvement vers le haut ou d'un mouvement vers le bas. Aucun de ces documents ne cherche cependant à paramétrer les comportements de vitesse des deux zones d'accostage haute et basse, en particulier l'une en fonction de l'autre, notamment à les homogénéiser ou à les différencier de manière volontaire.

On connaît encore des documents EP 1508844 et EP 2015156 un procédé de fonctionnement d'un actionneur d'élément mobile enroulable dans lequel les zones d'accostage sont définies par des durées d'activation de l'actionneur.

Le but de l'invention est de fournir un procédé de fonctionnement d'un actionneur remédiant aux inconvénients évoqués précédemment et améliorant les procédés connus de l'art antérieur. En particulier, l'invention propose un procédé de fonctionnement optimisant le comportement des actionneurs lors de manœuvres d'éléments mobiles au niveau des zones d'accostage et améliorant la qualité perçue par les utilisateurs de dispositifs domotiques comprenant de tels actionneurs.

Le procédé selon l'invention régit le fonctionnement d'un actionneur de manœuvre d'un élément mobile enroulable d'un équipement domotique tel que l'élément mobile peut se déplacer entre deux positions extrêmes. Le procédé comprend une première étape de définition d'une première consigne de vitesse angulaire de l'actionneur dans une première zone d'accostage et une deuxième étape de définition d'une deuxième consigne de vitesse angulaire de l'actionneur dans une deuxième zone d'accostage, les première et deuxième consignes de vitesse angulaire étant différentes.

Au moins l'une des première et deuxième consignes de vitesse angulaire peut être obtenue à partir de la définition d'une première consigne de vitesse linéaire de l'élément mobile dans la première zone d'accostage ou d'une seconde consigne de vitesse linéaire de l'élément mobile dans la deuxième zone d'accostage.

La première et la deuxième consignes de vitesse linéaire peuvent être définies comme une consigne de vitesse linéaire de l'élément mobile commune ou sensiblement commune dans les première et deuxième zones d'accostage, notamment comme une consigne de vitesse linéaire de l'élément mobile commune ou sensiblement commune lors des arrivées au niveau des positions extrêmes.

La première et la deuxième consignes de vitesse linéaire peuvent être définies par un rapport fixe l'une vis-à-vis de l'autre.

La vitesse angulaire de l'actionneur dans les zones d'accostage décroit à partir de l'entrée dans une zone d'accostage jusqu'à atteindre la valeur de consigne de vitesse angulaire définie pour chaque zone d'accostage lors de l'arrivée de l'élément mobile dans chacune des positions extrêmes.

Les phases de décroissance de la vitesse angulaire peuvent être différentes dans les deux zones d'accostage, notamment différentes en ce que les formes des profils de décroissance sont différentes.

La consigne de vitesse angulaire ou linéaire correspondant à une zone d'accostage peut être atteinte lorsqu'une partie dite zone d'approche de la zone d'accostage a été parcourue, en particulier lorsque les 2/3 de la zone d'accostage ont été parcourus.

La vitesse angulaire ou linéaire peut rester égale à la consigne sur une zone dite de proximité de la zone d'accostage.

Les vitesses de déplacement de l'élément mobile sont réduites dans les zones d'accostage par rapport à la vitesse de déplacement sur le reste de la course.

La vitesse angulaire de l'actionneur hors des zones d'accostage peut être constante ou sensiblement constante.

La première et la deuxième consignes de vitesse angulaire peuvent être définies en utilisant des valeurs, notamment des valeurs approximatives, de diamètre d'enroulement de l'élément mobile à l'approche de chaque position extrême.

Selon l'invention, un actionneur électromécanique de manœuvre d'un élément mobile enroulable d'un équipement domotique, destiné à entraîner l'élément mobile entre deux positions extrêmes, comprend des moyens matériels et/ou logiciels de mise en œuvre du procédé de fonctionnement défini précédemment.

Les moyens matériels et/ou logiciels peuvent comprendre un moyen de définition d'une première consigne de vitesse angulaire de l'actionneur dans une première zone d'accostage, un moyen de définition d'une deuxième consigne de vitesse angulaire de l'actionneur dans une deuxième zone d'accostage et un moyen de régulation de la vitesse de rotation de son arbre de sortie de sorte à réguler la vitesse de l'actionneur à l'une et/ou l'autre des première et deuxième consignes.

Selon l'invention, une installation domotique comprend un actionneur défini précédemment.

L'invention sera mieux comprise à la lecture de la description qui va suivre, donnée uniquement à titre d'exemple et faite en se référant aux dessins annexés sur lesquels :
La figure 1 représente sous forme de schéma fonctionnel une installation domotique munie d'un actionneur selon l'invention.
La figure 2 représente les évolutions de la vitesse de rotation d'un arbre d'un actionneur selon l'invention en fonction de la position de l'élément mobile le long de la course, l'élément mobile étant entraîné dans un premier sens et dans un deuxième sens.
La figure 3 est un ordinogramme d'un mode d'exécution du procédé de fonctionnement selon l'invention.

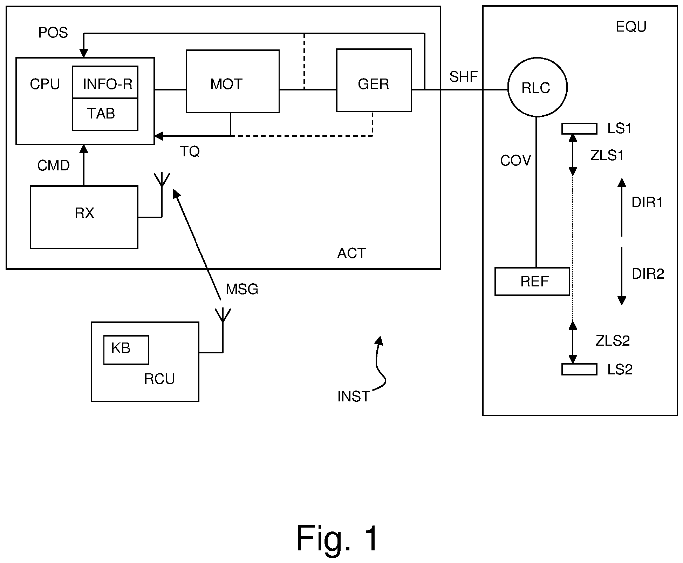

L'installation INST, représentée à la figure 1, comprend un actionneur ACT, notamment un actionneur électromécanique tubulaire, muni d'un moteur MOT dont l'arbre de sortie entraîne un réducteur GER. L'arbre de sortie SHF du réducteur GER constitue l'arbre de sortie de l'actionneur. Il est lié cinématiquement à un équipement domotique EQU, en particulier à un tube d'enroulement RLC de l'équipement domotique. Un élément mobile enroulable COV est destiné à s'enrouler sur ce tube. Par la commande de l'alimentation électrique du moteur, on commande ainsi les déplacements de l'élément mobile enroulable. L'extrémité inférieure de l'élément mobile enroulable COV est attachée à une lame finale REF. L'équipement domotique peut notamment consister en un volet roulant, une porte d'accès ou un store équipant un bâtiment.

Le moteur MOT est activé dans un premier sens ou dans un deuxième sens par une unité CPU de commande de l'alimentation du moteur MOT, cette unité comprenant par exemple un microcontrôleur. L'unité de commande reçoit des ordres de commande à l'aide d'une liaison CMD la reliant à un récepteur d'ordres RX. Les ordres sont transmis à l'aide d'une interface de commande distante RCU, par exemple nomade, munie d'une interface homme-machine KB comportant au moins une touche de commande. De préférence, l'interface de commande distante RCU communique par ondes radioélectriques avec le récepteur d'ordres, comme représenté par la flèche MSG. De préférence, la liaison entre l'interface de commande et le récepteur d'ordres est de type bidirectionnel, ce qui permet d'afficher sur l'interface de commande distante RCU des messages relatifs à l'état de l'actionneur. Alternativement, la communication peut être du type filaire.

Une première grandeur interne POS relative à la rotation du moteur est mesurée par l'unité de commande CPU. Cette grandeur est préférentiellement donnée par la sortie d'un capteur de rotation disposé par exemple à la sortie du réducteur GER. Elle donne à titre indicatif une information sur la position de la lame finale. Alternativement, le capteur de rotation peut être disposé à la sortie du moteur MOT, comme représenté par un trait pointillé. Dans une variante, la grandeur interne POS relative à la rotation du moteur est la durée d'activation du moteur. Dans ce cas, cette grandeur est mesurée par un compteur de temps du microcontrôleur compris dans l'unité de commande CPU.

Une deuxième grandeur interne TQ relative au couple mécanique fourni par le moteur est mesurée directement au niveau du moteur, comme indiqué par une flèche en trait plein, en utilisant l'intensité du courant si le moteur est à courant continu et aimants permanents ou en utilisant la tension aux bornes du condensateur de déphasage si le moteur est à induction, monophasé, à condensateur permanent. Alternativement, le couple TQ est mesuré indirectement au niveau du réducteur, comme indiqué par un trait pointillé, ou en toute autre partie de l'actionneur.

Dans chaque cas, une combinaison des différentes variantes est aussi utilisable pour définir les grandeurs internes. Les grandeurs internes peuvent également être obtenues par calcul à partir d'un paramètre mesuré au niveau de l'actionneur ou de l'élément mobile lui-même.

La vitesse angulaire peut être obtenue à partir d'une ou plusieurs de ces grandeurs internes.

Le déplacement en translation de la lame finale est limité par une première butée de fin de course haute LS1 et/ou par une deuxième butée de fin de course basse LS2. Alternativement, les limites sont fixées par enregistrement dans l'unité de commande de valeurs de comptage correspondant à ces positions extrêmes.

A proximité de chacune de ces positions de fin de course est définie une zone dite d'accostage ZLS1 et ZLS2, dans laquelle le comportement de l'actionneur est modifié, en particulier à l'approche de la fin de course haute à la montée, c'est-à-dire dans une première direction DIR1 et à l'approche de la fin de course basse à la descente, c'est-à-dire dans une deuxième direction DIR2.

Le comportement en déplacement de l'élément enroulable est préférentiellement différent dans les zones d'accostages lorsque l'élément enroulable quitte les positions de fin de course.

Du fait de l'épaisseur de l'élément mobile enroulable (par exemple l'épaisseur des lames d'un volet roulant, celles-ci s'enroulant les unes sur les autres autour du tube d'enroulement), le rayon d'enroulement de celui-ci peut varier fortement avec son degré d'ouverture, c'est-à-dire avec la position linéaire de la lame finale REF.

En particulier, c'est à proximité de la fin de course basse, respectivement de la fin de course haute, c'est-à-dire dans les deux zones d'accostage haute et basse que le rayon d'enroulement est à son minimum, respectivement maximum. Il en résulte que pour une même consigne de vitesse de pilotage de l'actionneur, les vitesses de déplacement linéaire de la lame finale seront radicalement différentes : la vitesse de déplacement linéaire dans la zone d'accostage haute étant de ce fait bien plus importante que la vitesse de déplacement linéaire dans la zone d'accostage basse pour une même vitesse de rotation du tube d'enroulement. Le sens de déplacement peut également influer sur la vitesse linéaire, ainsi que les caractéristiques mécaniques de l'installation.

Sans tenir compte du diamètre d'enroulement, un choix de consigne de vitesse de pilotage pour une zone d'accostage ZLS1 vers le haut identique à la consigne de vitesse de pilotage adaptée à la descente dans la zone d'accostage basse ZLS2 aurait pour effet que la vitesse d'accostage vers le haut serait trop importante et entraînerait des contraintes mécaniques sur l'élément mobile à chaque cycle. Dans ce cas, quelle que soit la sensibilité de détection de l'effort, l'inertie de l'élément mobile entraînerait un arrêt brutal au niveau de la fin de course haute. Ceci aurait pour conséquences des chocs, des sollicitations fortes du frein, ou des échauffements. Inversement, un choix de consigne de vitesse de pilotage pour une zone d'accostage ZLS2 vers le bas identique à la consigne de vitesse de pilotage adaptée à la montée dans la zone d'accostage haute ZLS1 aurait pour effet que la vitesse d'accostage vers le bas serait trop basse. Ce choix résulterait en un comportement surprenant et rallongerait de trop le délai de fermeture du volet. De plus, il pourrait provoquer des arrêts intempestifs avant l'arrivée à la fin de course basse.

Un choix adapté de vitesse linéaire permet de marquer visuellement un changement dans le déplacement de l'écran, permet d'empiler les lames d'un volet roulant avec souplesse, et de réduire les risques de pincement (entre le seuil d'une fenêtre et l'élément mobile ou entre un caisson de l'élément mobile et l'élément mobile).

Quelles que soient les conditions influant sur la vitesse linéaire, il est souhaitable d'obtenir un fonctionnement harmonieux de l'élément mobile enroulable. En particulier, il est important que la vitesse linéaire de la lame finale se réduise avant l'arrivée en position de fin de course, à la montée ou à la descente. Outre le fait qu'il améliore l'impression de qualité perçue par l'utilisateur, ce fonctionnement protège l'élément mobile enroulable et l'installation elle-même.

Dans les phases d'arrêt, c'est-à-dire à l'entrée dans une zone d'accostage, l'invention propose de réguler la consigne de vitesse de pilotage pour assurer une décroissance de la vitesse linéaire de l'élément mobile dans la zone d'accostage. Par ailleurs, en tenant compte notamment des différences de rayon ou diamètre d'enroulement, deux consignes de vitesse de pilotage sont appliquées pour un déplacement dans la zone d'accostage haute vers la fin de course haute et dans la zone d'accostage basse vers la fin de course basse. Ces consignes de vitesse de pilotage sont déterminées pour paramétrer les vitesses linéaires dans les deux zones d'accostage permettant d'intégrer les différences liées à l'installation au niveau de la zone d'accostage haute et de la zone d'accostage basse. En particulier, ces consignes de vitesse sont définies en lien l'une avec l'autre. Un exemple particulier de ce paramétrage est d'obtenir des vitesses linéaires sensiblement identiques. Un autre exemple consiste à obtenir un rapport fixe entre les vitesses linéaires dans la zone d'accostage haute et dans la zone d'accostage basse.

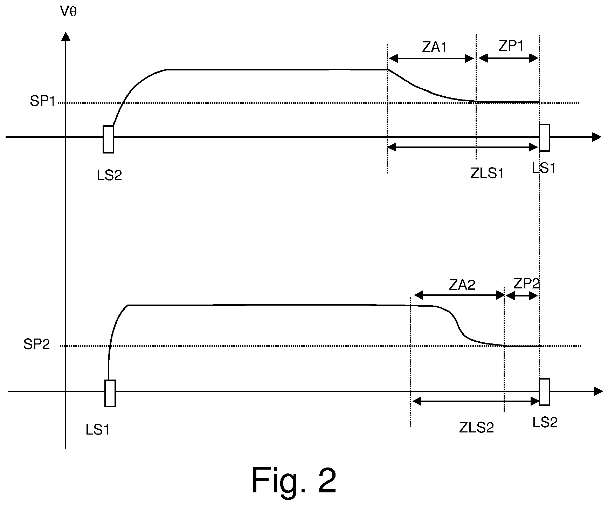

La figure 2 donne de manière indicative un profil de vitesse de pilotage pour le déplacement de la lame finale entre les fins de course haute et basse dans le sens de déplacement vers la fin de course concernée.

La décroissance de vitesse peut être linéaire ou selon une courbe asymptotique jusqu'à atteindre une vitesse de consigne SP1 ou SP2. Il n'est pas nécessaire que la décroissance soit la même dans la zone d'accostage vers la butée basse que dans la zone d'accostage vers la butée haute.

Hors des zones d'accostage, le choix de la consigne de pilotage est indépendant du choix de la consigne de pilotage dans les zones d'accostage. La vitesse de pilotage peut être maintenue constante (ainsi que représenté sur la figure 2, ce qui a pour effet que la vitesse linéaire de déplacement de la lame finale varie avec le diamètre d'enroulement et donc avec la position de l'élément mobile) ou la vitesse de déplacement peut être maintenue constante.

Selon les cas décrits dans le paragraphe ci-dessus, la vitesse (de pilotage ou linéaire) à l'entrée dans la zone d'accostage pourra être différente. La décroissance de vitesse dans la zone d'accostage aura donc comme valeur de départ cette valeur de vitesse à l'entrée en zone d'accostage et comme valeur d'arrivée la vitesse de consigne définie pour chaque zone d'accostage. La courbe de décroissance sera donc définie à partir de ces deux valeurs. Elle pourra être différente dans les deux zones d'accostage, comme représenté sur la figure 2, selon le choix d'algorithme de pilotage dans ces zones.

Il est également possible de prévoir plusieurs paliers de changement de vitesse dans la zone d'accostage.

Dans cette zone d'accostage et en particulier dans une faible zone d'approche de la butée, les variations de rayon d'enroulement sont faibles. La vitesse de pilotage et la vitesse linéaire sur chaque zone sont donc comparables. Il est intéressant de prévoir d'atteindre la consigne de vitesse avant d'atteindre la butée ou la position de fin de course, par exemple d'atteindre la consigne de vitesse lorsqu'une partie seulement, par exemple les 2/3, de la zone d'accostage est parcourue.

En d'autres termes, la zone d'accostage peut comprendre une première zone dite d'approche ZA1, ZA2, dans laquelle la vitesse angulaire décroit jusqu'à atteindre la vitesse de consigne et une zone de proximité ZP1, ZP2, dans laquelle la vitesse angulaire est sensiblement constante et égale à la consigne de vitesse définie pour la zone d'accostage correspondante.

L'actionneur comprend des moyens matériels et/ou logiciels permettant de régir son fonctionnement de manière conforme au procédé objet de l'invention. Les moyens logiciels peuvent notamment comprendre un moyen de code de programme informatique adapté à la réalisation des étapes du procédé objet de l'invention, lorsque le programme tourne sur un ordinateur. L'actionneur comprend un moyen de définition d'une première consigne de vitesse angulaire SP1 de l'actionneur dans une première zone d'accostage ZLS1 et un moyen de définition d'une deuxième consigne de vitesse angulaire SP2 de l'actionneur dans une deuxième zone d'accostage ZLS2. Il comprend de préférence un moyen de régulation de vitesse permettant de réguler la vitesse de rotation de son arbre de sortie à une valeur définie. Il comprend encore préférentiellement des mémoires pour enregistrer la première consigne de vitesse angulaire et la deuxième consigne de vitesse angulaire. Les moyens de définition de consignes peuvent comprendre des moyens de calculs.

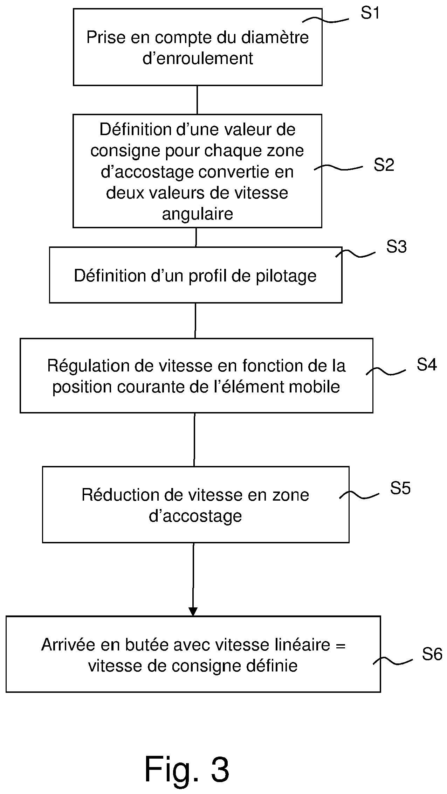

Un mode d'exécution du procédé de fonctionnement selon l'invention est décrit ci-après en référence à la figure 3.

Dans une étape S1, une valeur représentative du diamètre d'enroulement, pour chaque position de l'élément mobile à l'arrivée au niveau d'une fin de course, est prise en compte. Cette valeur représentative du diamètre d'enroulement peut être prédéterminée (valeur moyenne pour une installation standard, valeur associée au type d'actionneur par exemple) ou fournie à l'installation par une manœuvre particulière, par exemple comme décrit dans la demande WO2007/080493.

Dans une étape S2, des valeurs de consigne de vitesse linéaire de l'élément mobile CL1, CL2 définies pour chaque zone d'accostage sont converties en deux valeurs de consigne SP1, SP2 de vitesse angulaire au niveau des deux fins de course, en utilisant notamment les valeurs de diamètre d'enroulement obtenues au cours de l'étape précédente. Une valeur de consigne de vitesse linéaire commune CL peut être définie pour les deux zones d'accostage.

Les étapes S1 et S2 correspondent donc à une étape de définition et/ou de sélection de deux valeurs de consignes de vitesse angulaire SP1 et SP2 différentes permettant d'intégrer les différences de comportement de l'installation au niveau de la zone d'accostage haute et de la zone d'accostage basse.

Dans une étape S3, ces valeurs de consigne de vitesse angulaire contribuent à définir un profil de pilotage de l'élément mobile entre les deux positions de fin de course, c'est-à-dire un profil d'évolution ou un type d'évolution des vitesses angulaires tout au long de la course de l'élément mobile et, en particulier le long des zones d'accostage.

Dans une étape S4, on réalise une étape de régulation de la vitesse de pilotage en fonction de la position courante de l'élément mobile, repérée par le capteur de position et du profil de pilotage défini à l'étape précédente.

Ainsi,dans une étape S5, à l'entrée dans une zone d'accostage, la vitesse est réduite progressivement jusqu'à atteindre la consigne de vitesse SP1, SP2 prédéfinie à l'étape S2. L'élément mobile arrive donc au niveau d'une fin de course avec une vitesse de déplacement choisie et déterminée notamment par les consignes de vitesse angulaire, par exemple une vitesse de déplacement identique ou sensiblement identique que ce soit une fin de course haute ou une fin de course basse, au cours d'une étape S6.

A l'extérieur des zones d'accostage, il n'est pas nécessaire de réguler la vitesse de pilotage pour obtenir une vitesse linéaire constante. Il est préférable de piloter le mouvement de l'élément mobile de sorte à privilégier la détection d'un éventuel obstacle.

De même dans les zones de démarrage à partir d'une fin de course, une vitesse linéaire croissante peut être générée de manière indépendante au reste de la course. La vitesse de pilotage peut alors ou non tenir compte des informations relatives au diamètre d'enroulement.

La mise en place de ces consignes de vitesse peut avoir lieu une fois que les zones d'accostages ont été définies, en particulier, une fois que les fins de course ont été atteintes et/ou enregistrées.

Dans tout ce document, on utilise indifféremment les termes « consigne » et « valeur de consigne » pour désigner une valeur de consigne.

## Revendications

1. Procédé de fonctionnement d'un actionneur (ACT) de manœuvre d'un élément mobile enroulable (COV) d'un équipement domotique (EQU), l'élément mobile pouvant se déplacer entre deux positions extrêmes, le procédé comprenant une première étape de définition d'une première consigne de vitesse angulaire (SP1) de l'actionneur dans une première zone d'accostage (ZLS1) et une deuxième étape de définition d'une deuxième consigne de vitesse angulaire (SP2) de l'actionneur dans une deuxième zone d'accostage (ZLS2), les première et deuxième consignes de vitesse angulaire étant différentes, les vitesses de déplacement de l'élément mobile étant réduites dans les zones d'accostage par rapport à la vitesse de déplacement de l'élément mobile sur le reste de la course.

2. Procédé de fonctionnement selon la revendication précédente, **caractérisé en ce qu'**au moins l'une des première et deuxième consignes de vitesse angulaire est obtenue à partir de la définition d'une première consigne (CL1) de vitesse linéaire de l'élément mobile dans la première zone d'accostage (ZLS1) et/ou d'une seconde consigne (CL2) de vitesse linéaire de l'élément mobile dans la deuxième zone d'accostage (ZLS2).

3. Procédé de fonctionnement selon la revendication précédente, **caractérisé en ce que** la première et la deuxième consignes de vitesse linéaire sont définies comme une consigne de vitesse linéaire de l'élément mobile commune ou sensiblement commune (CL) dans les première et deuxième zones d'accostage, notamment comme une consigne de vitesse linéaire de l'élément mobile commune ou sensiblement commune lors des arrivées au niveau des positions extrêmes.

4. Procédé de fonctionnement selon la revendication 2 ou 3, **caractérisé en ce que** la première et la deuxième consignes de vitesse linéaire sont définies par un rapport fixe l'une vis-à-vis de l'autre.

5. Procédé de fonctionnement selon l'une des revendications précédentes, **caractérisé en ce que** la vitesse angulaire de l'actionneur dans les zones d'accostage décroit à partir de l'entrée dans une zone d'accostage jusqu'à atteindre la valeur de consigne de vitesse angulaire (SP1, SP2) définie pour chaque zone d'accostage lors de l'arrivée de l'élément mobile dans chacune des positions extrêmes.

6. Procédé de fonctionnement selon la revendication précédente, **caractérisé en ce que** les phases de décroissance de la vitesse angulaire sont différentes dans les deux zones d'accostage, notamment **en ce que** les formes des profils de décroissance sont différentes.

7. Procédé de fonctionnement selon l'une des revendications précédentes, **caractérisé en ce que** la consigne de vitesse angulaire ou linéaire correspondant à une zone d'accostage est atteinte lorsqu'une partie dite zone d'approche de la zone d'accostage a été parcourue, en particulier lorsque les 2/3 de la zone d'accostage ont été parcourus.

8. Procédé de fonctionnement selon la revendication précédente, **caractérisé en ce que** la vitesse angulaire ou linéaire reste égale à la consigne sur une zone dite de proximité de la zone d'accostage.

9. Procédé de fonctionnement selon l'une des revendications précédentes, **caractérisé en ce que** la vitesse angulaire de l'actionneur hors des zones d'accostage est constante ou sensiblement constante.

10. Procédé de fonctionnement selon l'une des revendications précédentes, **caractérisé en ce que** la première et la deuxième consignes de vitesse angulaire sont définies en utilisant des valeurs, notamment des valeurs approximatives, de diamètre d'enroulement de l'élément mobile à l'approche de chaque position extrême.

11. Actionneur électromécanique (ACT) de manœuvre d'un élément mobile enroulable (COV) d'un équipement domotique (EQU), destiné à entraîner l'élément mobile entre deux positions extrêmes, **caractérisé en ce qu'**il comprend des moyens matériels et/ou logiciels (CPU, INFO-R, TAB, TQ, POS) de mise en œuvre du procédé de fonctionnement selon l'une des revendications précédentes.

12. Actionneur selon la revendication précédente, **caractérisé en ce que** les moyens matériels et/ou logiciels comprennent un moyen de définition d'une première consigne de vitesse angulaire (SP1) de l'actionneur dans une première zone d'accostage (ZLS1), un moyen de définition d'une deuxième consigne de vitesse angulaire (SP2) de l'actionneur dans une deuxième zone d'accostage (ZLS2) et un moyen de régulation de la vitesse de rotation de son arbre de sortie de sorte à réguler la vitesse de l'actionneur à l'une et/ou l'autre des première et deuxième consignes.

13. Installation domotique (INST) comprenant un actionneur (ACT) selon l'une des revendications 11 et 12 et un élément mobile (COV).

## Patentansprüche

1. Betriebsverfahren eines Stellantriebs (ACT) zur Betätigung eines aufrollbaren beweglichen Elements (COV) einer Gebäudeautomationseinrichtung (EQU), wobei sich das bewegliche Element zwischen zwei Extrempositionen bewegen kann, wobei das Verfahren einen ersten Schritt der Definition eines ersten Sollwertes der Winkelgeschwindigkeit (SP1) des Stellantriebs in einem ersten Anlaufbereich (ZLS1) und einen zweiten Schritt der Definition eines zweiten Sollwertes der Winkelgeschwindigkeit (SP2) des Stellantriebs in einem zweiten Anlaufbereich (ZLS2) umfasst, wobei der erste und der zweite Sollwert der Winkelgeschwindigkeit verschieden sind, wobei die Bewegungsgeschwindigkeiten des beweglichen Elements in den Anlaufbereichen gegenüber der Bewegungsgeschwindigkeit des beweglichen Elements auf dem restlichen Weg verringert sind.

2. Betriebsverfahren nach dem vorhergehenden Anspruch, **dadurch gekennzeichnet, dass** wenigstens einer von dem ersten und zweiten Sollwert der Winkelgeschwindigkeit aus der Definition eines ersten Sollwertes (CL1) der Lineargeschwindigkeit des beweglichen Elements im ersten Anlaufbereich (ZLS1) und/oder eines zweiten Sollwertes (CL2) der Lineargeschwindigkeit des beweglichen Elements im zweiten Anlaufbereich (ZLS2) erhalten wird.

3. Betriebsverfahren nach dem vorhergehenden Anspruch, **dadurch gekennzeichnet, dass** der erste und der zweite Sollwert der Lineargeschwindigkeit als ein gemeinsamer oder im Wesentlichen gemeinsamer Sollwert der Lineargeschwindigkeit des beweglichen Elements (CL) im ersten und zweiten Anlaufbereich definiert sind, insbesondere als ein gemeinsamer oder im Wesentlichen gemeinsamer Sollwert der Lineargeschwindigkeit des beweglichen Elements bei den Ankünften an den Extrempositionen.

4. Betriebsverfahren nach Anspruch 2 oder 3, **dadurch gekennzeichnet, dass** der erste und der zweite Sollwert der Lineargeschwindigkeit durch ein festes Verhältnis zueinander definiert sind.

5. Betriebsverfahren nach einem der vorhergehenden Ansprüche, **dadurch gekennzeichnet, dass** sich die Winkelgeschwindigkeit des Stellantriebs in den Anlaufbereichen ab dem Eintritt in einen Anlaufbereich verringert, bis sie beim Eintreffen des beweglichen Elements in der jeweiligen Extremposition den für den jeweiligen Anlaufbereich definierten Sollwert der Winkelgeschwindigkeit (SP1, SP2) erreicht.

6. Betriebsverfahren nach dem vorhergehenden Anspruch, **dadurch gekennzeichnet, dass** die Phasen der Abnahme der Winkelgeschwindigkeit in den zwei Anlaufbereichen unterschiedlich sind, insbesondere dadurch, dass die Formen der Profile der Abnahme unterschiedlich sind.

7. Betriebsverfahren nach einem der vorhergehenden Ansprüche, **dadurch gekennzeichnet, dass** der einem Anlaufbereich entsprechende Sollwert der Winkel-oder Lineargeschwindigkeit erreicht wird, wenn ein "Annäherungsbereich" genannter Teil des Anlaufbereichs durchlaufen worden ist, insbesondere wenn 2/3 des Anlaufbereichs durchlaufen worden sind.

8. Betriebsverfahren nach dem vorhergehenden Anspruch, **dadurch gekennzeichnet, dass** die Winkel-oder Lineargeschwindigkeit in einem sogenannten Nahbereich des Anlaufbereichs gleich dem Sollwert bleibt.

9. Betriebsverfahren nach einem der vorhergehenden Ansprüche, **dadurch gekennzeichnet, dass** die Winkelgeschwindigkeit des Stellantriebs außerhalb der Anlaufbereiche konstant oder im Wesentlichen konstant ist.

10. Betriebsverfahren nach einem der vorhergehenden Ansprüche, **dadurch gekennzeichnet, dass** der erste und der zweite Sollwert der Winkelgeschwindigkeit unter Verwendung von Werten, insbesondere von Näherungswerten, des Aufrolldurchmessers des beweglichen Elements bei der Annäherung an die jeweilige Extremposition definiert werden.

11. Elektromechanischer Stellantrieb (ACT) zur Betätigung eines aufrollbaren beweglichen Elements (COV) einer Gebäudeautomationseinrichtung (EQU), welcher dazu bestimmt ist, das bewegliche Element zwischen zwei Extrempositionen anzutreiben, **dadurch gekennzeichnet, dass** er Hardware- und/oder Softwaremittel (CPU, INFO-R, TAB, TQ, POS) zur Durchführung des Betriebsverfahren nach einem der vorhergehenden Ansprüche umfasst.

12. Stellantrieb nach dem vorhergehenden Anspruch, **dadurch gekennzeichnet, dass** die Hardware-und/oder Softwaremittel ein Mittel zur Definition eines ersten Sollwertes der Winkelgeschwindigkeit (SP1) des Stellantriebs in einem ersten Anlaufbereich (ZLS1), ein Mittel zur Definition eines zweiten Sollwertes der Winkelgeschwindigkeit (SP2) des Stellantriebs in einem zweiten Anlaufbereich (ZLS2) und ein Mittel zur Regelung der Drehzahl seiner Abtriebswelle, um die Geschwindigkeit des Stellantriebs auf den einen und/oder den anderen von dem ersten und zweiten Sollwert einzustellen, umfassen.

13. Domotik-Anlage (INST), welche einen Stellantrieb (ACT) nach einem der Ansprüche 11 und 12 und ein bewegliches Element (COV) umfasst.

## Claims

1. Method for operating an actuator (ACT) for manoeuvring a windable mobile element (COV) of a home automation appliance (EQU), the mobile element being able to be displaced between two extreme positions, the method comprising a first step for definition of a first angular speed setpoint (SP1) of the actuator in a first docking area (ZLS1) and a second step for definition of a second angular speed setpoint (SP2) of the actuator in a second docking area (ZLS2), the first and second angular speed setpoints being different, the speeds of displacement of the mobile element being reduced in the docking areas relative to the speed of displacement over the rest of the travel.

2. Operating method according to the preceding claim, **characterized in that** at least one of the first and second angular speed setpoints is obtained from the definition of a first linear speed setpoint (CL1) of the mobile element in the first docking area (ZLS1) and/or of a second linear speed setpoint (CL2) of the mobile element in the second docking area (ZLS2).

3. Operating method according to the preceding claim, **characterized in that** the first and second linear speed setpoints are defined as a common or substantially common linear speed setpoint (CL) of the mobile element in the first and second docking areas, in particular as a common or substantially common linear speed setpoint of the mobile element on arrival at the extreme positions.

4. Operating method according to Claim 2 or 3, **characterized in that** the first and second linear speed setpoints are defined by a set ratio relative to one another.

5. Operating method according to one of the preceding claims, **characterized in that** the angular speed of the actuator in the docking areas decreases from the entry into a docking area until the angular speed setpoint value (SP1, SP2) defined for each docking area is reached on arrival of the mobile element in each of the extreme positions.

6. Operating method according to the preceding claim, **characterized in that** the angular speed decreasing phases are different in the two docking areas, in particular **in that** the forms of the decreasing profiles are different.

7. Operating method according to one of the preceding claims, **characterized in that** the angular or linear speed setpoint corresponding to a docking area is reached when a so-called approach area part of the docking area has been covered, in particular when 2/3 of the docking area have been covered.

8. Operating method according to the preceding claim, **characterized in that** the angular or linear speed remains equal to the setpoint over a so-called proximity area of the docking area.

9. Operating method according to one of the preceding claims, **characterized in that** the angular speed of the actuator outside of the docking areas is constant or substantially constant.

10. Operating method according to one of the preceding claims, **characterized in that** the first and second angular speed setpoints are defined by using values, in particular approximate values, of the winding diameter of the mobile element on approaching each extreme position.

11. Electromechanical actuator (ACT) for manoeuvring a windable mobile element (COV) of a home automation appliance (EQU), intended to drive the mobile element between two extreme positions, **characterized in that** it comprises hardware and/or software means (CPU, INFO-R, TAB, TQ, POS) for implementing the operating method according to one of the preceding claims.

12. Actuator according to the preceding claim, **characterized in that** the hardware and/or software means comprise a means for defining a first angular speed setpoint (SP1) of the actuator in a first docking area (ZLS1), a means for defining a second angular speed setpoint (SP2) of the actuator in a second docking area (ZLS2) and a means for regulating the speed of rotation of its output shaft so as to regulate the speed of the actuator to one and/or the other of the first and second setpoints.

13. Home automation installation (INST) comprising an actuator (ACT) according to one of Claims 11 and 12 and a mobile element (COV).
